# FASCICULE DE BREVET EUROPEEN

(11) **EP 0 569 264 B1**
(45) Date de publication et mention de la délivrance du brevet: **06.11.1996**
(21) Numéro de dépôt: 93401004.2
(22) Date de dépôt: 16.04.1993
(51) Int. Cl.: A01N 25/30, A01N 57/20, C05G 3/06

(54) **Composition phytosanitaire hydrosoluble incorporant un dérivé de semisulfosuccinate**
Sulfobernsteinsäurehalbestern enthaltende wasserlösliche Pflanzenschutzmittel
Water soluble pesticidal composition containing a semi-sulfosuccinate derivative

(30) Priorité: 05.05.1992 FR 9205520
(43) Date de publication de la demande: 10.11.1993
(73) Titulaire: RHONE-POULENC GERONAZZO S.p.A., 20021 Ospiate di BollateMilano (IT)
(72) Inventeur: Bramatti, Valério, F-20020 Arese (IT); Marchetto, Antonio, I-21047 Saronno (IT)
(74) Mandataire: Ricalens, François

(56) Documents cités:
- EP-A- 0 297 305
- EP-A- 0 336 151
- RESEARCH DISCLOSURE vol. 212, no. 39, Décembre 1981, HAVANT, GB ANONYMOUS 'pesticide formulation'

## Description

La présente invention a pour objet une nouvelle composition phytosanitaire contenant au moins un dérivé de semi- sulfosuccinate.

L'application des matières actives phytosanitaires au niveau des sites à traiter est généralement réalisée par pulvérisation de dispersions fluides correspondantes. Il s'agit soit de solutions dans des solvants organiques, ou de dispersions ou solutions aqueuses.

Dans le cas des solutions aqueuses, au moins un tensio-actif et/ou autre composé est généralement présent en vu de favoriser la solubilisation et/ou de renforcer l'activité biologique de la matière active considérée.

A titre illustratif, on peut en particulier mentionner les formulations aqueuses classiques de glyphosate. Le glyphosate est un herbicide de type aminophosphate très utilisé et ses formulations commerciales incorporent avantageusement une amine éthoxylée.

La présence de cette amine éthoxylée renforce considérablement l'activité biologique du glyphosate et en outre conduit à une formulation qui demeure efficace quelques soient les conditions climatiques d'utilisation. Vraisemblablement, l'amine éthoxylée active la diffusion du glyphosate à travers la barrière cuticulaire des plantes et/ou végétaux.

L'intérêt de ces composés, à effet synergique sur l'activité biologique et/ou bénéfique sur la solubilité du ou des principes actifs auquel(s) ils sont associés, est malheureusement souvent affecté par leur toxicité chimique. Les solvants organiques, tensio-actifs ou composés annexes comme les amines éthoxylées posent d'évidents problèmes de toxicité. Les amines éthoxylées s'avèrent ainsi nettement plus irritantes et toxiques que le glyphosate en soit.

La prise en compte de plus en plus sérieuse des différents problèmes de nature écologique conduit à la recherche de compositions phytosanitaires, hydrosolubles, dotées d'une activité biologique comparable aux formulations actuelles et en revanche de toxicité nettement amoindrie.

La présente invention a précisément pour objet de proposer une nouvelle formulation phytosanitaire conforme à ces exigences.

Plus précisément, la présente invention concerne une composition hydrosoluble contenant à titre de principe actif au moins une matière active phytosanitaire caractérisée en ce qu'elle contient en outre une quantité efficace d'au moins un composé de formule générale 1: 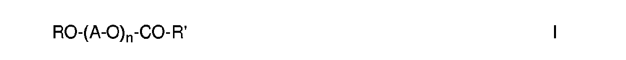 dans laquelle:
- R' représente un groupement 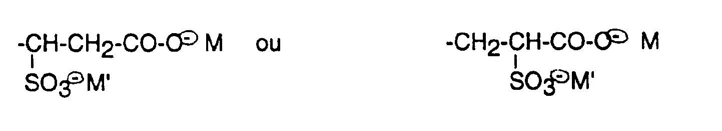 avec M et M' représentant, indépendamment l'un de l'autre, un atome d'hydrogène, un métal alcalin ou alcalinoter- reux ou un sel d'ammonium éventuellement substitué,
- R représente un radical alkyle, linéaire ou ramifié, en Ci-C₂ₒ,
- A représente un groupement alkylène, linéaire ou ramifié, en C₂-C₄,
- n représente un nombre entier ou décimal pouvant varier entre 1 et 10 avec A pouvant être de nature différente d'un motif à l'autre lorsque n est supérieur à 1.

Par matière active phytosanitaire, on entend désigner selon l'invention les pesticides, les herbicides, les fongicides mais également les éléments nutritifs favorisant la croissance et le développement des plantes. Il s'agit de préférence d'herbicides.

Parmi les herbicides préférés selon l'invention on citera tout particulièrement les dérivés aminophosphates et préférentiellement le glyphosate, le sulphosate et le glucosinate ainsi que leurs sels organiques ou inorganiques respectifs. Les dérivés de glyphosate sont de préférence employés.

En ce qui concerne les éléments nutritifs, il s'agit de préférence de sels métalliques comme le Zinc et le Fer, par exemple, et préférentiellement de Manganèse. Ces sels sont utilisés sous forme de chélates de type E.D.TA. par exemple ou de sulfate.

De manière inattendue, les composés de formule générale 1 possèdent, en présence de matière active phytosanitaire, une solubilité adéquate en milieu aqueux et un effet bénéfique sur la diffusion de cette matière active phytosanitaire au sein des membranes cuticulaires.

Les composés de formule générale 1 remplacent notamment avantageusement les amines éthoxylés classiques dans les formulations phytosanitaires impliquant à titre de matière active au moins un dérivé d'aminophosphate. Ils conduisent à des formulations d'activité très satisfaisante et dotées d' une tensio-superficielle adéquate.

Enfin, de toxicité quasiment nulle, ils ont l'avantage d'être totalement biodégradables. Certains des produits représentés par la formule générale 1 sont notamment déjà employés en industrie cosmétique pour leur faible pouvoir irritant de la peau.

Dans le cas particulier des aminophosphates, les compositions selon l'invention présentent en outre l'avantage suivant:
Les formulations classiques d'aminophosphate et plus particulièrement à base de sel hydrosoluble de glyphosate et incorporant une amine éthoxylée, ne sont pas compatibles avec des formulations aqueuses d'autres herbicides ou fongicides. Les mélanges résultants sont instables et on observe très rapidement un phénomène de floculation qui gène considérablement la pulvérisation du mélange correspondant. Cette incompatibilité, imputable au caractère cationique de l'amine éthoxylée, est très contraignante pour l'usager. Afin d'éviter ce phénomène de floculation, il se trouve dans l'obligation d'appliquer séparément le traitement au sel de glyphosate. Il en résulte un surcroît de temps et de coût.

Dans le cas de la présente invention, cette incompatibilité n'existe plus. Les compositions revendiquées peuvent être mélangées efficacement avec des suspensions aqueuses concentrées en autres agents pesticides et/ou fongicides.

Selon un mode préféré de l'invention, les compositions contiennent des composés de formule générale 1 dans laquelle A représente de préférence un groupement éthylène et/ou propylène avec n variant entre 2 et 8. Il s'agit plus particulièrement de composés de formule générale 1 dans laquelle A représente un groupement éthylène.

A titre de compositions préférées selon l'invention, on citera celles contenant à titre de principe actif au moins un sel hydrosoluble du glyphosate et un composé de formule générale 1 dans laquelle
- R représente un alkyle en C₈-C₁₀ de distribution moléculaire comme suit:
   environ 1% en alkyle en C₆
   environ 39,5% en alkyle en C₈
   environ 51,6% en alkyle en C₁₀
   environ 1% en alkyle en C₁₂
   avec environ 8,9% se répartissant en alkyle en C₇ et celui en C₁₁,
- A représente un groupement éthylène avec n égal à 2 et
- M et M' représentent un atome de sodium.

Par glyphosate, on entend désigner le N-phosphonométhylglycine ainsi que tout dérivé de celui-ci conduisant en solution aqueuse à des anions glyphosates.

A titre de dérivés, on peut plus particulièrement citer ses sels de métaux alcalins comme le sodium ou le potassium et ses sels d'ammonium, substitués ou non, dont les amines secondaires ou primaires comme l'isopropylamine, la diméthylamine ou les diamines comme l'éthylènediamine.

Les sels hydrosolubles préférés du glyphosate en application herbicide sont notamment le sel d'isopropylamine et le sel de triméthylsulfonium.

Dans les compositions selon l'invention le rapport en poids de la matière active et du composé de formule générale 1 peut varier entre 1/5 et 10/1. Ce rapport est bien entendu adapté selon les conditions d'emploi envisagées pour la composition correspondante. Toutefois, il se situe de préférence entre 1/2 et 6/1 et préférentiellement entre 1/1 et 4/1. Dans le cas particulier des aminophosphates, le rapport en poids s'entend en matière active exprimée sous forme d'équivalent acide.

La composition selon l'invention peut se présenter sous la forme d'un concentré liquide aqueux destiné à être dilué au moment de son emploi en vu de sa pulvérisation. Dans ce type de concentré la concentration en matière(s) active(s) peut varier entre 50g/ 1 et 500g/ 1 . Le ou les produit(s) de formule générale 1 y sont de préférence introduits sous une forme liquide en solution aqueuse à 50%.

Il peut également s'agir d'une formulation solide du type granulés, poudres, tablettes ou comprimés. Dans ce cas, le composé de formule générale I y est présent sous une forme solide obtenue par exemple par co-atomisation avec un sel solide comme le benzoate de sodium.

Bien entendu, la composition selon l'invention peut contenir en outre d'autres additifs. Il peut s'agir par exemple d' agents anti-gel comme le glycérol ou l'éthylène glycol, de colorants, d'agents anti-mousses et/ou de tensio-actifs.

Elle peut également contenir une quantité efficace d'au moins une autre matière active phytosanitaire. Il peut en particulier s'agir d' herbicides choisis parmi les simazine, isoxaben, atrazine, diuron, terbuthylazine, norflurazon, metamitron, chloridazon et sulfonyle d'urée.

Les compositions selon l'invention, sous forme liquide ou solubilisées en milieux aqueux, sont compatibles en dilution avec des supensions et/ou solutions concentrées de matières actives phytosanitaires de natures différentes. On observe aucun phénomène de floculation lors des mélanges des solutions respectives.

La présente invention se rapporte également aux applications de la composition selon l'invention à titre d'herbicide, fongicide ou d'engrais.

Les exemples présentés ci-après mettent en évidence d'autres avantages et caractéristiques de la présente invention sans en limiter la portée.

### EXEMPLE 1 :

### Compatibilité des composés selon l'invention avec du glyphosate en solution aqueuse.

Cette étude est réalisée sur un échantillon d'une solution aqueuse de glyphosate, sel d'isopropylamine de la Société MONSANTO. Cette solution contient 62,2 % de sel isopropylamine et donc 46,2 % de glyphosate acide.

La solubilité des composés selon l'invention est testée sur une solution aqueuse contenant 360 g/I de glyphosate acide sous forme de sel isopropylamine, ce qui conduit à la formulation suivante:

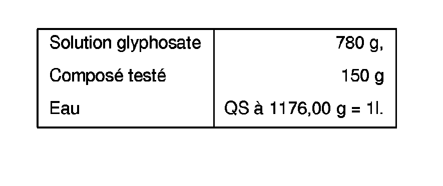

### 1. Variation de la longueur de la chaîne alkvle et du degré d'éthoxvlation :

Les additifs utilisés varient par la longueur de chaîne de l'alcool linéaire RO et par le degré d'éthoxylation. Tous les produits testés sont des semi-sulfosuccinates de sodium.

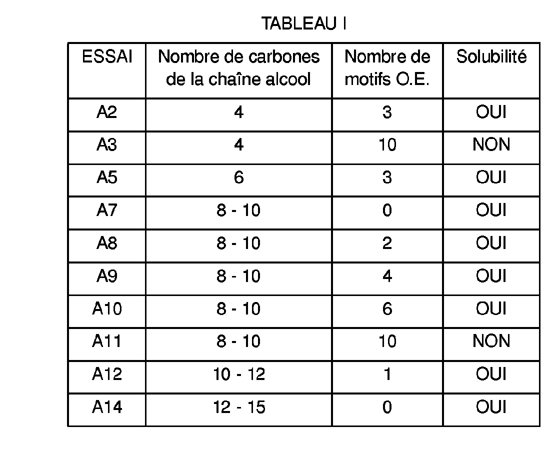

### 2. Variation du rapport éthoxylation/propoxylation

L'alcool choisi est celui en C₈-C₁₀.

Les produits sont tous des semi-sulfosuccinates de sodium.

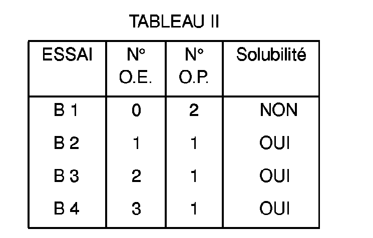

### 3. Variation de la nature du sel de sulfite utilisé:

L'alcool choisi est celui en C₈-C₁₀.

Le degré d'éthoxylation est de 2 pour tous les produits.

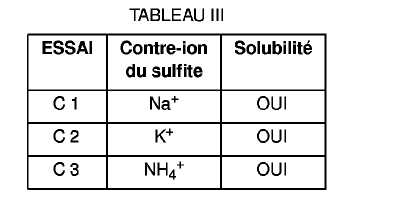

### EXEMPLE 2

Parmi les solutions testées en exemple 1, quelques unes ont été sélectionnées pour leur bonne solubilité et soumises à une mesure de tension superficielle.

Cette mesure est effectuée avec le Stalagmomètre de TRAUBE® à 25°C, à partir des solutions en eau distillée contenant 1 % d'une solution aqueuse à 360 g/I de glyphosate acide sous forme de sel d'isopropylamine et contenant 200 g/I d'additif.

Les résultats sont présentés dans le tableau IV ci-après.

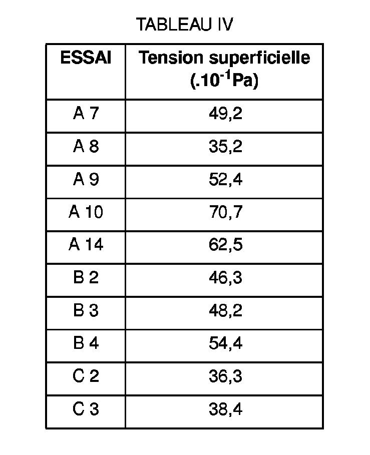

### EXEMPLE 3

Une solution de glyphosate, stabilisée par un additif selon l'invention, est testée pour sa compatibilité avec les solutions d'herbicides ou fongicides suivantes :
a) Herbicide :
   Si = Atrazine 500 g/l S.C. contenant 80 g/l de gomme xanthane sol. 2 %.
   S₂ = Atrazine 500 g/l S.C. contenant 15 g/l de Actapulgite.
   S₃ = Isoproturon 500 g/l S.C. contenant 80 g/l de gomme xanthane sol. 2 %.
b) Fongicide:
   S₄ = Soufre 500 g/l S.C. contenant 80 g/l de gomme xanthane sol. 2 %.

La solution de glyphosate selon l'invention possède la formulation suivante :

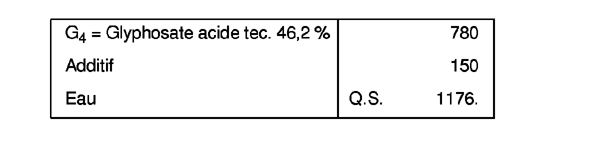

L'additif est représenté par la formule générale I dans laquelle:
- R représente un alkyle en C₈-C₁₀ de distribution moléculaire comme suit:
   environ 1% en alkyle en C₆
   environ 39.5% en alkyle en C₈
   environ 51,6% en alkyle en C₁₀
   environ 1% en alkyle en C₁₂

   avec environ 8,9% se répartissant en alkyle en C₇ et celui en C₁₁,
- A représente un groupement éthylène avec n égal à 2 et
- M et M'représentent un atome de sodium.

A titre comparatif, des solutions commerciales de glyphosate c'est-à-dire contenant une amine éthoxylée ont également été testées. Il s'agit plus particulièrement des formulations suivantes :

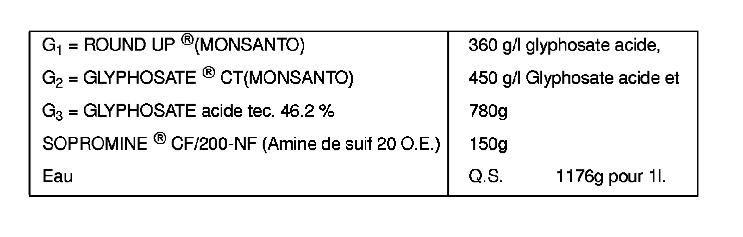

Pour préparer un mélange de la solution de glyphosate avec l'une des solutions précédentes, on met en oeuvre l'une ou l'autre des 2 méthodes suivantes.

### - Méthode 1 :

On verse 95 ml d'eau standard répondant aux normes CIPAC D dans un cylindre gradué de 100 ml avec bouchon. On y ajoute 1 g de solution G. L'ensemble est homogénéisé par 5 retournements du cylindre. On y ajoute 1 g de solution S. On réhomogénéise le mélange par 10 retournements du cylindre. On note après 30 mn et 2 heures l'aspect de la solution.

### - Méthode 2 :

On verse 95 ml d'eau standard CIPAC D dans un cylindre gradué de 100 ml avec bouchon. On y ajoute 1 g de solution S. On homogénéise le mélange par 10 retournements du cylindre. On ajoute 1 g de solution G. L'ensemble est homogénéisé par 5 retournements du cylindre. L'aspect de la solution est noté après 30 mn et 2 heures.

Les tableaux V et VI rendent compte des résultats.

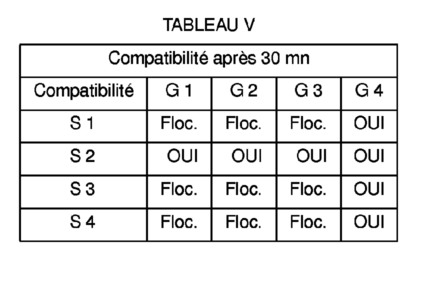

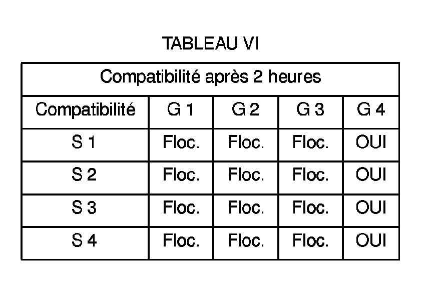

On note que seule la solution de glyphosate selon l'invention est compatible avec suspensions concentrées en fongicides ou herbicides.

### EXEMPLE IV

Essais de solubilisation de compositions selon l'invention et incorporant à titre de matières actives phytosanitaires des éléments micronutritifs.

Le composé de formule générale I testé est defini comme suit:
R: représente un groupement alkyle de C₈-C₁₀
   - M et M'sont des atomes de Sodium : n = 2 et A représente un groupement éthylène.
   - Sa concentration : 50 % en eau.

Les éléments micronutritifs choisis sont les suivants:
I : VYTEL ^{®} commercialisé par la société RHONE-POULENC CHEMICAL 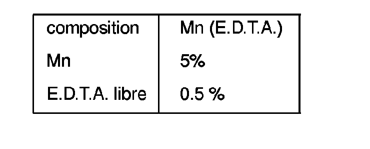
Il : MANGRO^{®} commercialisé par la société RHONE-POULENC CHEMICALS

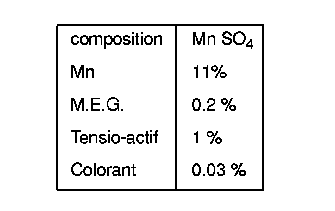

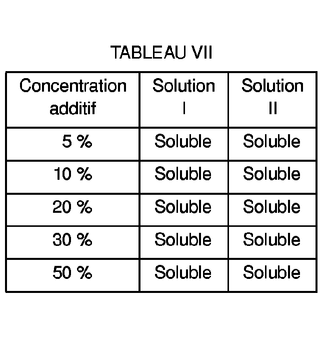

La solubilité des composants selon l'invention demeure très satisfaisante même pour des concentrations très importantes en composé de formule générale I.

## Revendications

1. Composition hydrosoluble contenant à titre de principe actif au moins une matière active phytosanitaire caractérisée en ce qu'elle contient en outre au moins une quantité efficace d'un composé de formule générale 1 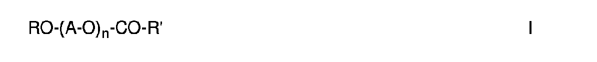 dans laquelle:
R' représente un groupement 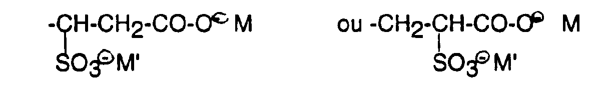 avec M et M' représentant, indépendamment l'un de l'autre, un atome d'hydrogène, un métal alcalin ou alcali- noterreux ou un sel d'ammonium éventuellement substitué,
- R représente un radical alkyle linéaire ou ramifié de C₁-C₂₀,
- A représente un groupement alkylène linéaire ou ramifié en C₂-C₄,
- n représente un nombre entier ou décimal pouvant varier entre 1 et 10 avec A pouvant être de nature différente d'un motif à l'autre lorsque n est supérieur à 1 et en ce que la matière active phytosanitaire est du glyphosate ainsi que ses sels organiques ou inorganique.

2. Composition hydrosoluble selon la revendication 1, caractérisée en ce que A représente un groupement éthylène et/ou propylène avec n variant de préférence entre 1 et 8.

3. Composition hydrosoluble selon l'une quelconque des revendications 1 à 2 caractérisée en ce quelle contient à titre de matière active phytosanitaire au moins un sel hydrosoluble de glyphosate et un composé de formule générale 1 dans laquelle
- R représente un alkyle en C₈-C₁ de distribution moléculaire comme suit:
environ 1% en alkyle en C₆
environ 39.5% en alkyle en C₈
environ 51,6% en alkyle en C₁₀
environ 1% en alkyle en C₁₂
avec environ 8,9% se répartissant en alkyle en C₇ et celui en C₁₁,
- A représente un groupement éthylène avec n égal à 2 et
- M et M'un atome de sodium.

4. Composition hydrosoluble selon la revendication 3 caractérisée en ce que le glyphosate y est présent sous la forme de son sel d'isopropylamine.

5. Composition hydrosoluble selon l'une quelconque des revendications 1 à 4 caractérisée en ce que le rapport en poids de la matière active phytosanitaire et du composé de formule générale I est compris entre 1/5 et 10/1.

6. Composition hydrosoluble selon la revendication 4 caractérisée en ce que le rapport varie entre 1/2 et 6/1.

7. Composition hydrosoluble selon l'une des revendications 1 à 6 caractérisée en ce qu'elle se présente sous la forme d'un concentré liquide contenant entre 50g/l et 500g/l en matière active.

8. Composition hydrosoluble selon l'une des revendications 1 à 6 caractérisée en ce qu'elle se présente sous la forme d'un solide.

9. Composition hydrosoluble selon l'une quelconque des revendications 1 à 8 caractérisée en ce qu'elle est miscible avec des dispersions ou solutions aqueuses de concentrés de matières actives phytosanitaires de nature différente.

10. Composition hydrosoluble selon l'une quelconque des revendications précédentes caractérisée en ce qu'elle contient en outre au moins un composé choisi parmi les agents anti-gel, les colorants, les agents anti-mousses et les tensio-actifs.

11. Composition hydrosoluble selon l'une quelconque des revendications précédentes caractérisée en ce qu'elle contient en outre une quantité efficace d'au moins un herbicide choisi parmi le simazine, ixobazen, atrazine, diuron, terbuthylazine, norflurazon, metamitron, chloridazon ou sulfonyle durée.

12. Application d'une composition telle que définie dans l'une des revendications précédentes à titre d'herbicide.

## Claims

1. A water-soluble composition containing, as an active ingredient, at least one phytoprotective active ingredient, characterized in that it further contains at least an effective quantity of a compound with general formula I: 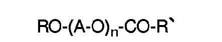 where:
R' represents the following group: 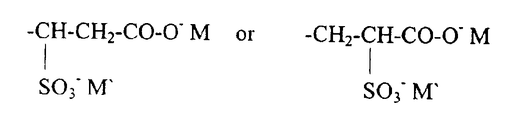 where
• M and M' independently represent a hydrogen atom, an alkali or alkaline-earth metal or an ammonium salt which may be substituted;
• R represents a linear or branched C₁-C₂₀ alkyl radical;
• A represents a linear or branched C₂-C₄ alkylene radical;
• n represents a whole or decimal number between 1 and 10 where A can be different from one unit to another when n is greater than 1, and in that the phytoprotective active ingredient is a glyphosate, including its organic or inorganic salts.

2. A water-soluble composition according to claim 1, characterized in that A represents an ethylene and/or propylene group and n is preferably between 1 and 8.

3. A water-soluble composition according to claim 1 or claim 2, characterized in that it contains at least one water-soluble glyphosate salt as the phytoprotective active ingredient and a compound with general formula in which:
• R represents a C₈-C₁₀ alkyl with a molecular distribution as follows:
• about 1% of C₆ alkyl;
• about 39.5% of C₈ alkyl;
• about 51.6% of C₁₀ alkyl;
about 1% of C₁₂ alkyl; and
• about 8.9% distributed between C₇ alkyl and C₁₁ alkyl;
• A represents an ethylene group with n equal to 2; and
• M and M' represent a sodium atom.

4. A water-soluble composition according to claim 3, characterized in that the glyphosate is present in the form of its isopropylamine salt.

5. A water-soluble composition according to any one of claims 1 to 4, characterized in that the weight ratio between the phytoprotective active ingredient and the compound with general formula I is in the range 1/5 to 10/1.

6. A water-soluble composition according to claim 4, characterized in that the ratio is in the range 1/2 to 6/1.

7. A water-soluble composition according to any one of claims 1 to 6, characterized in that it is in the form of a concentrated liquid containing between 50 g/l and 500 g/l of active ingredient.

8. A water-soluble composition according to any one of claims 1 to 6, characterized in that it is in the form of a solid.

9. A water-soluble composition according to any one of claims 1 to 8, characterized in that it is miscible with concentrated aqueous solutions or dispersions of phytoprotective active ingredients of different natures.

10. A water-soluble composition according to any one of the preceding claims, characterized in that it further contains at least one compound selected from antigelling agents, colouring agents, anti-foaming agents and surfactants.

11. A water-soluble composition according to any one of the preceding claims, characterized in that it further contains an effective quantity of at least one herbicide selected from simazine, isoxaben, atrazine, diuron, terbuthylazine, norflurazon, metamitron, chloridazon and sulphonyl urea.

12. The use of a composition as defined in any one of the preceding claims, as a herbicide.

## Patentansprüche

1. Wasserlösliche Zusammensetzung, die als aktiven Hauptbestandteil mindestens eine aktive Pflanzenschutzsubstanz enthält, dadurch gekennzeichnet, daß sie außerdem mindestens eine wirksame Menge einer Verbindung der allgemeinen Formel I enthält 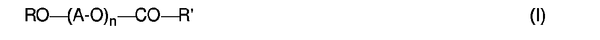 in der:
- R' eine Gruppierung 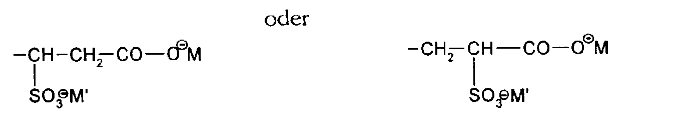 darstellt, wobei M und M' unabhängig voneinander ein Wasserstoffatom, ein Alkali- oder Erdalkalimetall oder ein Ammoniumsalz darstellen, das gegebenenfalls substituiert ist,
- R einen linearen oder verzweigten C₁-C₂ₒ-Alkylrest darstellt,
- A eine lineare oder verzweigte C₂-C₄-Alkylengruppierung darstellt,
- n eine ganze Zahl oder Dezimalzahl, die zwischen 1 und 10 variieren kann, darstellt, wobei A sich von einer Einheit zur anderen unterscheiden kann, wenn n größer 1 ist,
und daß die aktive Pflanzenschutzsubstanz Glyphosat sowie seine organischen oder anorganischen Salze ist.

2. Wasserlösliche Zusammensetzung nach Anspruch 1, dadurch gekennzeichnet, daß A eine Ethylen- undloder Propylengruppierung mit vorzugsweise zwischen 1 und 8 variierendem n darstellt.

3. Wasserlösliche Zusammensetzung nach einem der Ansprüche 1 bis 2, dadurch gekennzeichnet, daß die aktive Pflanzenschutzsubstanz mindestens ein wasserlösliches Glyphosatsalz und eine Verbindung der allgemeinen Formel I enthält, in der
- R einen C₈-C₁₀-Alkylrest mit folgender molekularer Verteilung darstellt:
etwa 1 % C₆-Alkyl
etwa 39,5 % C₈-Alkyl
etwa 51,6 % C₁₀-Alkyl
etwa 1 % C₁₂-Alkyl,
etwa 8,9 %, die sich auf C₇- und C₁₁-Alkyl verteilen
- A eine Ethylengruppierung mit n gleich 2 darstellt, und
- M und M' ein Natriumatom darstellen.

4. Wasserlösliche Zusammensetzung nach Anspruch 3, dadurch gekennzeichnet, daß das darin enthaltene Glyphosat in Form seines Isopropylaminsalzes vorliegt.

5. Wasserlösliche Zusammensetzung nach einem der Ansprüche 1 bis 4, dadurch gekennzeichnet, daß das Gewichtsverhältnis der aktiven Pflanzenschutzsubstanz und der Verbindung der allgemeinen Formel I zwischen 1/5 und 10/1 liegt.

6. Wasserlösliche Zusammensetzung nach Anspruch 4, dadurch gekennzeichnet, daß das Verhältnis zwischen 1/2 und 6/1 variiert.

7. Wasserlösliche Zusammensetzung nach einem der Ansprüche 1 bis 6, dadurch gekennzeichnet, daß sie in Form eines flüssigen Konzentrats vorliegt, das zwischen 50 g/I und 500 g/I an aktiver Substanz enthält.

8. Wasserlösliche Zusammensetzung nach einem der Ansprüche 1 bis 6, dadurch gekennzeichnet, daß sie in Form eines Feststoffs vorliegt.

9. Wasserlösliche Zusammensetzung nach einem der Ansprüche 1 bis 8, dadurch gekennzeichnet, daß sie mit wäßrigen Dispersionen oder Lösungen der Konzentrate der aktiven Pflanzenschutzsubstanzen von unterschiedlicher Natur mischbar ist.

10. Wasserlösliche Zusammensetzung nach einem der vorhergehenden Ansprüche, dadurch gekennzeichnet, daß sie außerdem mindestens eine Verbindung enthält, die ausgewählt ist aus Antigelierungsmitteln, Färbemitteln, Schaumverhütungsmitteln und oberflächenaktiven Mitteln.

11. Wasserlösliche Zusammensetzung nach einem der vorhergehenden Ansprüche, dadurch gekennzeichnet, daß sie außerdem eine ausreichende Menge mindestens eines Herbizids enthält, das ausgewählt ist aus Simazin, Ixobazen, Atrazin, Diuron, Terbuthylazin, Norflurazon, Metamitron, Chloridazon oder Sulfonylharnstoff.

12. Verwendung einer wie in einem der vorhergehenden Ansprüche definierten Zusammensetzung als Herbizid.
